Europäisches Patentamt

(19) European Patent Office

Office européen des brevets

(11) Veröffentlichungsnummer: **0 042 454**
**A1**

(12) ## EUROPÄISCHE PATENTANMELDUNG

(21) Anmeldenummer: 80103572.6

(22) Anmeldetag: 24.06.80

(51) Int. Cl.³: **F 23 K 5/00**
F 23 L 15/04, F 02 M 31/18

(43) Veröffentlichungstag der Anmeldung:
**30.12.81 Patentblatt 81/52**

(84) Benannte Vertragsstaaten:
**AT BE CH DE FR GB IT LI LU NL SE**

(71) Anmelder: **Wittek, Franz X.**
**Gertrud-Bäumer-Strasse 32**
**D-6200 Wiesbaden(DE)**

(72) Erfinder: **Wittek, Franz X.**
**Gertrud-Bäumer-Strasse 32**
**D-6200 Wiesbaden(DE)**

(74) Vertreter: **Seids, Heinrich, Dipl.-Phys.**
**Bierstadter Höhe 15 Postfach 5105**
**D-6200 Wiesbaden(DE)**

(54) Verfahren zum Betreiben von Verbrennungsgeräten und Verbrennungskraftmaschinen und Heizungsvorrichtung, bei welchen dieses Verfahren angewendet wird.

(57) Bei der Verbrennung von flüssigen Brennstoffen und Kraftstoffen in Verbrennungsgeräten, insbesondere Heizgeräten und Verbrennungskraftmaschinen, treten Mängel, insbesondere hinsichtlich vollständiger Verbrennung, Erreichung eines verminderten Wirkungsgrades und Energieverlust auf. Der flüssige Brennstoff bzw. Kraftstoff wird vor dem Einführen in den Verbrennungsraum (30) unter Wärmezufuhr in einen Zustand übergeführt, der dem idealen Gas im Sinne des Boyle-Mariotteschen Gesetzes angenähert ist. Die dazu eforderliche Wärmemenge kann den Auspuffgasen, Rauchgasen oder auch einem Kühlsystem an Verbrennungskraftmaschinen entnommen werden. Es wird dadurch eine wesentliche Herabsetzung der Temperatur der Auspuffgase bzw. Rauchgase erreicht, und es werden die Abgase frei von giftigen Stoffen, insbesondere frei von Kohlenmonoxyd. Der Energieverlust wird auf ein solches Maß herabgesetzt, wie es die Betriebsfähigkeit des jeweiligen Verbrennungsgerätes als Minimum zuläßt.

Fig. 2

EP 0 042 454 A1

Dipl.-Phys. Heinrich Seids · Patentanwalt · Bierstadter Höhe 15 · Postfach 5105 · 6200 Wiesbaden 1 · ☎ (06121) 562022

- | -

Wiesbaden, den 23. Juni 1980
S/we

Franz X. Wittek
Gertrud-Bäumer-Strasse 32
6200 Wiesbaden

BEZEICHNUNG GEÄNDERT
siehe Titelseite

_____

Verfahren und Einrichtungen zum Betreiben von Verbrennungsgeräten, insbesondere Heizgeräten und Verbrennungskraftmaschinen

_____


Die Erfindung bezieht sich auf ein Verfahren zum Betreiben
von Verbrennungsgeräten insbesondere Heizgeräten und Verbrennungskraftmaschinen mit einem Gemisch von gasförmigem
Brennstoff und Verbrennungsgas, insbesondere Luft. Ferner
bezieht sich die Erfindung auf Verbrennungsgeräte insbesondere Heizgeräte und Verbrennungskraftmaschinen, die in
diesem neuartigen Verfahren betrieben werden können.


Es ist bekannt, Verbrennungsgeräte unmittelbar mit gasförmigen Brennstoffen in Verbindung mit Verbrennungsgas
zu betreiben. Jedoch hat man bei diesen bekannten Betriebsweisen bisher ein Gemisch von gasförmigem Brennstoff
bzw. Kraftstoff und Verbrennungsgas auf normaler Umgebungstemperatur zugeführt und dabei eine nur teilweise Verbrennung des gasförmigen Brennstoffes bzw. Kraftstoffes
und dementsprechend auch nur einen verminderten Wirkungsgrad erzielen können. Außerdem haben die mit dem Miführen

Dipl.-Phys. Heinrich Seids · Patentanwalt · Bierstadter Höhe 15 · Postfach 5105 · 6200 Wiesbaden 1 · ☏ (0 61 21) 56 20 22

- 2 -

von gasförmigen Brennstoffen und Kraftstoffen dazu geführt, daß man ortsbewegliche Verbrennungsgeräte insbesondere Verbrennungskraftmaschinen in Fahrzeugen fast ausschließlich mit flüssigen Brennstoffen bzw. Kraftstoffen betreibt, die entweder vor dem Einführen in den Verbrennungsraum vernebelt und für die Zuführung zum Verbrennungsraum dosiert oder in dosierter Menge unter Druck und unter Vernebelung in den Verbrennungsraum in dosierter Menge eingepresst werden. Diese Art der Zuführung benutzt/man in ihrer grundsätzlichen Konzeption auch in stationären Heizungsgeräten und Heizungsanlagen. Es hat sich aber herausgestellt, daß auch dieser Betrieb mit flüssigen Brennstoffen bzw. Kraftstoffen nur eine teilweise Verbrennung erreichen läßt und dementsprechend nur einen verminderten Wirkungsgrad der Verbrennungsgeräte. Dies äußert sich nicht zuletzt in einer sehr hohen Temperatur der Abgase bzw. Auspuffgase und hohen CO-Anteil in den Abgasen bzw. Auspuffgasen.

Aufgabe der Erfindung ist es, ein neuartiges Verfahren zum Betreiben von Verbrennungsgeräten, insbesondere Heizgeräten und Verbrennungskraftmaschinen vorzuschlagen, durch das eine vollständige Verbrennung des Brennstoffes bzw. Kraftstoffes und eine wesentliche Erhöhung des Wirkungsgrades erzielt wird. Dazu sollen Verbrennungsgeräte insbesondere Heizgeräte und Verbrennungskraftmaschinen dahingehend verbessert werden, daß sie in einem solchen neu-

# 0042454

- 3 -

artigen Verfahren betrieben werden können.

Zur Lösung dieser Aufgabe wird im erfindungsgemäßen Verfahren flüssiger, vergasbarer Brennstoff bzw. Kraftstoff vor dem Einführen in den Verbrennungsraum unter Wärmezufuhr in echt gasförmigen, isothermen Brennstoff bzw. Kraftstoff übergeführt und vor oder in dem Verbrennungsraum mit dem Verbrennungsgas gemischt, wobei die Temperatur dieses Gasgemisches vor der Verbrennung mit der im Verbrennungsraum vorgegebenen Ausdehnungsmöglichkeit Wärmeabnahmeverhältnissen auf im wesentlichen isothermische Ausdehnung des Gasgemisches während der Verbrennung abgestimmt wird. Durch diese gegenseitige Abstimmung und das Überführen des Brennstoffes bzw. Kraftstoffes in gasförmigen isothermen Zustand werden optimale Bedingungen für den Verbrennungsvorgang eingestellt und erreicht, daß die Mengendosierung des in den Verbrennungsraum gegebenen Gasgemisches richtig auf die vom Verbrennungsgerät abzuziehende kinetische oder Wärmeenergie abgestimmt werden kann. Die Temperaturen in den Abgasen werden gegenüber den bisherigen Betriebsweisen wesentlich abgesenkt. Dementsprechend wird der Wirkungsgrad der Verbrennungsgeräte erheblich verbessert.

Eine weitere Absenkung der mit den Abgasen verlorengehenden Wärmeenergie läßt sich dadurch erreichen, daß die Wärme für die Überführung des flüssigen Brennstoffes bzw. Kraftstoffes in Gasform vom Abgas des jeweiligen Verbrennungs-

Dipl.-Phys. Heinrich Seids · Patentanwalt · Bierstadter Höhe 15 · Postfach 5105 · 6200 Wiesbaden 1 · ☎ (0 61 21) 56 20 22

- 4 -

gerätes abgezogen wird. Dabei wird vor allem die für die Überführung des jeweiligen Brennstoffes bzw. Kraftstoffes in Gasform erforderliche Verdampfungswärme aus dem Abgas gewonnen. Man kann dabei zugleich die Temperatur des in Gasform übergeführten Kraftstoffes bzw. Brennstoffes an die Temperatur der Abgase angleichen.

Das erfindungsgemäße Verfahren bietet auch eine einfache Möglichkeit für das Einfahren bei Betriebsbeginn. Hierzu kann vernebelter Brennstoff bzw. Kraftstoff unter zunehmendem Aufheizen entsprechend der von den Abgasen abziehbaren Wärmemenge benutzt werden. Es spielt sich somit der optimale Betriebszustand unter Übergang von vernebelten Brennstoff bzw. Kraftstoff auf vollständig in Gasform übergeführten aufgeheizten Kraftstoff ein.

Eine andere, vorteilhafte Möglichkeit ergibt sich durch das erfindungsgemäße Verfahren darin, daß durch die vollständige Überführung des Brennstoffes bzw. Kraftstoffes in Gasform praktisch keine Unterscheidung zwischen leichteren Kraftstoffen und Dieselkraftstoff mehr notwendig erscheint, da sich in Gasform übergeführter Dieselkraftstoff praktisch in gleicher Weise verbrennen läßt wie leichterer Kraftstoff. Es lassen sich somit praktisch alle Brennkraftmaschinen mit solchem Kraftstoff betreiben, der sich in Gasform überführen läßt. Ein solcher Kraftstoff ist im allgemeinen billiger und

Dipl.-Phys. Heinrich Seids · Patentanwalt · Bierstadter Höhe 15 · Postfach 5105 · 6200 Wiesbaden 1 · ☎ (0 61 21) 56 20 22

- 5 -

einfacher herstellbar als die auf die verschiedensten Brennkraftmaschinen abgestellten speziellen Kraftstoffe. Bei Betriebsbeginn kann man bei Benutzung eines solchen allgemeinen Betriebs-Brennstoffes bzw. Betriebskraftstoffes eine Brennkraftmaschine zunächst mit dem ihr in herkömmlicher Betriebsweise zugeordneten Brennstoff betreiben, bis die normale Betriebstemperatur erreicht ist. Es ist dann die Brennkraftmaschine auf den Betrieb mit einem oben erwähnten für alle Brennkraftmaschinen einheitlichen Kraftstoff im erfindungsgemäßen Verfahren umzuschalten.

Eine weitere Ausnutzung der Abwärme und noch stärkere Annäherung an isothermischen Betrieb von Verbrennungsgeräten läßt sich erreichen, wenn man auch das Verbrennungsgas entsprechend vorheizt. ·

Für Betrieb im erfindungsgemäßen Verfahren eignen sich alle Brennkraftmaschinen bei denen eine Pumpe zum Zuführen von flüssigem Kraftstoff von einem Kraftstofftank zum Verbrennungsraum und Einrichtungen zum Dosieren der Kraftstoffmenge in den Verbrennungsraum vorgesehen sind. Erfindungsgemäß ist bei einer solchen Verbrennungskraftmaschine hinter der Kraftstoffpumpe bzw. vor dem Kraftstoffeinlaß in den Verbrennungsraum eine Kraftstoff-Heizvorrichtung einzusetzen, die dazu ausgebildet ist, den Kraftstoff vollständig in Gasform überzuführen und die mit einer an den Auspuffkrümmer

Dipl.-Phys. Heinrich Seids · Patentanwalt · Bierstadter Höhe 15 · Postfach 5105 · 6200 Wiesbaden 1 · ☎ (0 61 21) 56 20 22

- 6 -

bzw. an die Auspuffeinrichtung angeschlossenen Einrichtung zum Aufnehmen der erforderlichen Wärmemenge verbunden ist. Beispielsweise kann die von der Kraftstoffpumpe kommende Kraftstoffleitung zum Wärmeaustausch um oder durch den Auspuffkrümmer geführt sein.

Bei Verbrennungskraftmaschinen die mit einem flüssigen Kraftstoff vernebelnden und in dosierter Menge zum Verbrennungsraum abgebenden Vergaser ausgerüstet sind, wird man die von der Kraftstoffpumpe zum Vergaser führende Kraftstoffleitung über diese Kraftstoff-Heizvorrichtung führen. Bei solcher Ausstattung wird beim Start der Brennkraftmaschine zunächst vernebelter Kraftstoff in herkömmlicher Weise in den Verbrennungsraum abgegeben, bis mit zunehmender Temperatur am Auspuff der Brennkraftmaschine eine Überführung des Kraftstoffes in Gasform eintritt und dann der in herkömmlicher Weise zum Vernebeln des Kraftstoffes dienende Vergaser jetzt nur noch das intensive Vermischen des Kraftstoff-Gases mit der Verbrennungsluft und das Dosieren des Gasgemisches bewirkt.

Bei solchen Brennkraftmaschinen die mit dem Kraftstoff in dosierter Menge unter Vernebeln in den Verbrennungsraum pressenden Einspritzpumpen ausgestattet sind, wird man erfindungsgemäß die von der Einspritzpumpe zum Verbrennungsraum führende Kraftstoffleitung über die erfindungsgemäße

Dipl.-Phys. Heinrich Seids · Patentanwalt · Bierstadter Höhe 15 · Postfach 5105 · 6200 Wiesbaden 1 · ☎ (0 61 21) 56 20 22

- 7 -

Kraftstoff-Heizvorrichtung führen. Auch bei dieser Ausführung wird zunächst der Kraftstoff durch Einspritzen in den Verbrennungsraum vernebelt, bis die Brennkraftmaschine ihre Betriebstemperatur erreicht. Während dieses Start-Zeitraumes geht die Brennkraftmaschine von herkömmlichem Betrieb auf den neuartigen Betrieb über, bei dem dann die durch die Einspritzpumpe dosierte Kraftstoffmenge in Gasform in den Verbrennungsraum geführt wird.

Das erfindungsgemäße Verfahren läßt sich auch zum Betreiben von Düsentriebwerken und Raketentriebwerken einsetzen. Man wird dann sinngemäß die Einrichtungen zur Übernahme der für die Überführung des Kraftstoffes in Gasform erforderlichen Wärmemenge aus dem Abgas an den Düsenausgang bzw. Raketenauslaß ansetzen.

Bei allen Brennkraftmaschinen kann man auch ein Vorwärmen bzw. Vorheizen der Verbrennungsluft vorsehen. Eine solche Heizvorrichtung kann beispielsweise hinter den Luftfilter angeordnet und mit dem Kühlmedium der Verbrennungskraftmaschine betrieben werden. Es ist aber auch möglich, die Leitung für die Verbrennungsluft in Form eines Wärmetauschers an die Auspuffeinrichtung heranzuführen.

Bei allen Brennkraftmaschinen empfiehlt es sich, zwischen der Kraftstoffpumpe und der Kraftstoffheizvorrichtung ein

Dipl.-Phys. Heinrich Seids · Patentanwalt · Bierstadter Höhe 15 · Postfach 5105 · 6200 Wiesbaden 1 · ☎ (0 61 21) 56 20 22

- 9 -

Rückschlagventil anzuordnen, um die Betriebssicherheit zu erhöhen. Das erfindungsgemäße Verfahren kann auch mit entsprechenden Vorteilen bei Heizungsvorrichtungen und Heizungsanlagen angewandt werden, bei denen am Verbrennungsraum ein Brenner für flüssigen Brennstoff mit Düse und Brennstoffpumpe angesetzt ist. M an wird in solchem Fall an den Auslaß für die Abgase einer solchen Heizvorrichtung oder Heizungsanlage eine Einrichtung zur Aufnahme der zum Überführen des flüssigen Brennstoffes in Gasform erforderlichen Wärmemenge anbringen und den Weg des Brennstoffes zwischen der Brennstoffpumpe und der Brennerdüse eine Brennstoffheizvorrichtung anbringen, die dazu ausgebildet ist, den Brennstoff vollständig in Gasform zu überführen und im wesentlichen auf die Temperatur der Abgase zu erhitzen. Man kann auch diese Brennstoffheizvorrichtung dadurch bilden, daß man die von der Brennstoffpumpe zur Brennerdüse führende Brennstoffleitung über die Einrichtung zur Aufnahme von Wärme aus den Abgasen führt. Auch bei solchen Heizvorrichtungen und Heizungsanlagen kann eine zusätzliche Einrichtung zum Vorheizen der Verbrennungsluft vorgesehen werden, um dadurch noch eine bessere Annäherung an den isothermischen Betriebszustand zu erreichen.

Ebenso empfiehlt es sich in Heizungsvorrichtungen und Heizungsanlagen in der Brennstoffleitung zwischen der Brennstoffheizvorrichtung und der Brennstoffpumpe ein Rückschlagventil

Dipl.-Phys. Heinrich Seids · Patentanwalt · Bierstadter Höhe 15 · Postfach 5105 · 6200 Wiesbaden 1 · ☎ (06121) 562022

- 9 -

oder ein sich automatisch bei Betriebsstörungen schließendes Absperrventil anzuordnen.

Ausführungsbeispiele werden anhand der beigefügten Skizzen näher erläutert. Es zeigen:

Figur 1   ein Schema für eine erfindungsgemäß zu betreibende, mit herkömmlichen Vergaser ausgestattete Brennkraftmaschine;

Figur 2   ein Schema für eine erfindungsgemäß zu betreibende Brennkraftmaschine mit Kraftstoffeinspritzpumpe; und

Figur 3   ein Schema für einen mit flüssigem Brennstoff erfindungsgemäß zu betreibenden Dampferzeugerkessel.

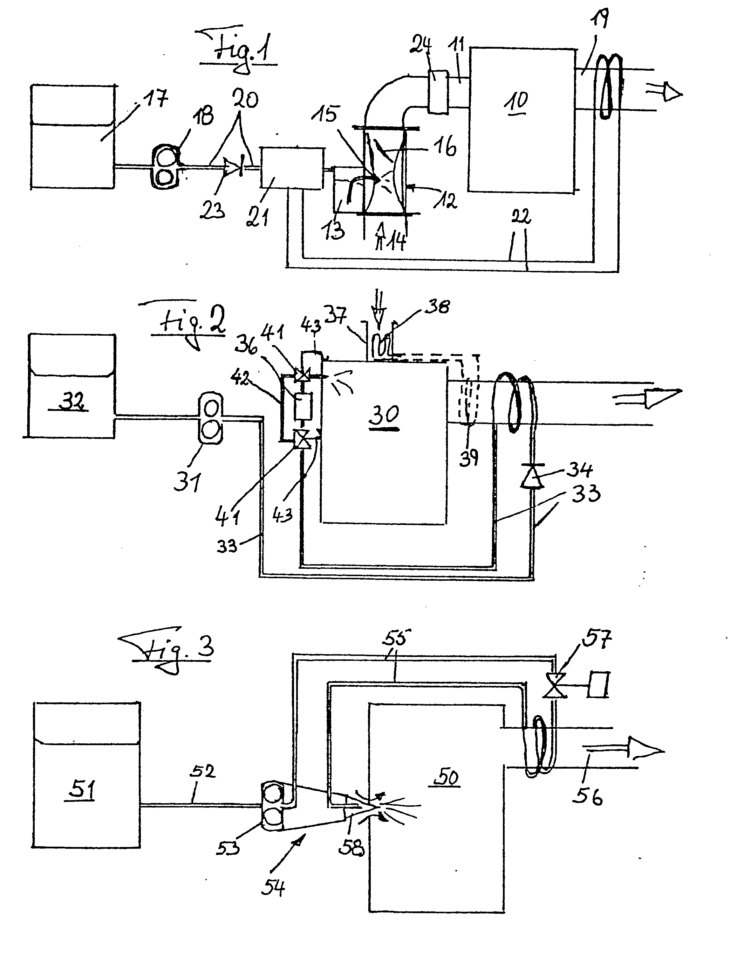

Im Beispiel der Figur 1 ist eine Brennkraftmaschine 10 vom Typ eines Otto-Motors vorgesehen, an deren Ansaugstutzen 11 ein herkömmlicher Vergaser 12 mit Treibstoffreservoir 13 und Lufteinlaß 14 sowie herkömmlicher Düse 15 und Dosierklappe 16 vorgesehen sind. Für die Beschickung des Vergasers 12 aus dem Kraftstofftank 17 ist eine herkömmliche Kraftstoffpumpe 18 vorgesehen.

Dipl.-Phys. Heinrich Seids · Patentanwalt · Bierstadter Höhe 15 · Postfach 5105 · 6200 Wiesbaden 1 · ☎ (0 61 21) 56 20 22

- 10 -

Die Brennkraftmaschine 10 ist in herkömmlicher Weise mit einem Auspuffstutzen und Auspuffkrümmer 19 versehen.

Erfindungsgemäß ist zwischen der Kraftstoffpumpe 18 und dem Vergaser 12 in der Kraftstoffleitung 20 eine Kraftstoffheizvorrichtung 21 angeordnet, die geeignet ist, den ihr zugeführten Kraftstoff auf die am Auspuffstutzen bzw. Auspuffkrümmer 19 herrschende Temperatur zu erhitzen und dabei vollständig in Gasform überzuführen. Hierzu ist in diesem dargestellten Beispiel zum Wärmeaustausch eine Wärmemedium-Leitung 22 vorgesehen, die durch oder um den Auspuffstutzen bzw. Auspuffkrümmer 19 geführt und in die Kraftstoffheizvorrichtung 21 geleitet ist.

Zur Erhöhung der Betriebssicherheit ist vor der Kraftstoffheizvorrichtung ein Rückschlagventil bzw. ein sich bei Betriebsstörung automatisch schließendes Ventil 23 in die Kraftstoffleitung 20 eingesetzt.

Bevorzugt kann zwischen dem Vergaser 12 und dem Ansaugstutzen der Verbrennungskraftmaschine 10 noch ein Gastrockner 24 beispielsweise ein solcher nach dem bekannten Orloff-Prinzip eingesetzt sein.

Dipl.-Phys. Heinrich Seids · Patentanwalt · Bierstadter Höhe 15 · Postfach 5105 · 6200 Wiesbaden 1 · ☎ (0 61 21) 56 20 22

- 11 -

Bei Inbetriebnahme der Verbrennungskraftmaschine 10 wird zunächst bei noch kaltem Auspuffstutzen oder Auspuffkrümmer 19 der flüssige Treibstoff im Vergaser 12 vernebelt und in herkömmlicher Weise in die Verbrennungskraftmaschine eingeführt. Wenn dann die Verbrennungskraftmaschine 10 ihre Betriebstemperatur erreicht hat, und der Auspuffstutzen bzw. Auspuffkrümmer 19 die ausreichende Wärmemenge an die Vorrichtung 21 zum Überführen des flüssigen Kraftstoffes in Gasform abgibt, tritt dann die oben beschriebene neuartige Betriebsweise der Vorrichtung ein.

Im Beispiel der Figur 2 ist eine mit Einspritzpumpe 31 arbeitende Verbrennungskraftmaschine 30 beispielsweise ein Benzinmotor mit Einspritzpumpe oder ein Dieselmotor vorgesehen. Zwischen der Einspritzpumpe 31 und dem Verbrennungsraum ist in diesem Fall eine in wärmeleitender Verbindung mit erhitzten Teilen des Motorblockes oder Auspuff der Verbrennungskraftmaschine 30 Kraftstoffleitung als Vorrichtung zum Überführen des Kraftstoffes in Gasform vorgesehen. Vom Kraftstofftank 32 wird der Kraftstoff über die Einspritzpumpe 31 auf eine zusätzliche Kraftstoffleitung 33 zu einem Sicherheitsventil 34 gedrückt, das sich bei Betriebsfehlern automatisch schließt. Vom Ventil 34 gelangt die Kraftstoffleitung 33 zu dem Auspuffstutzen bzw. Auspuffkrümmer 35. Dort ist die Leitung in wärmeleitende Berührung mit dem Auspuffkrümmer bzw. Auspuffstutzen 35 gebracht, so daß aus-

Dipl.-Phys. Heinrich Seids · Patentanwalt · Bierstadter Höhe 15 · Postfach 5105 · 6200 Wiesbaden 1 · ☎ (0 61 21) 56 20 22

- 12 -

reichend Wärme auf die Kraftstoffleitung übertragen wird, um den Kraftstoff vollständig in Gasform zu überführen. Von dort wird das Kraftstoffgas über einen Gastrockner 36 in den Verbrennungsraum gepresst. In die bei 37 angedeutete Zuführleitung für die Verbrennungsluft ist ein Heizelement 38 eingesetzt, das aus dem Kühlsystem der Verbrennungskraftmaschine oder einen gestrichelt dargestellten Wärmetauscher 39 beheizt wird. Dadurch wird auch die zugeführte Verbrennungsluft weitgehend auf die Temperatur der Auspuffgase vorerhitzt.

Um bei Anlaufen des Betriebes den flüssigen Kraftstoff in herkömmlicher  Weise in den Verbrennungsraum einspritzen zu können, ist der Gastrockner 36 mittels zweier temperaturgesteuerter Dreiwegeventile 41 und einem Leitungsstück 42 überbrückt. Wie bei 43 angedeutet, wird hierzu die Temperatur an geeigneter Stelle der Verbrennungskraftmaschine, beispielsweise am Motorblock abgegriffen.

In beiden Ausführungsformen kann die Vorrichtung zum Aufheizen des Kraftstoffes auch in den Motorblock der Verbrennungskraftmaschine einbezogen sein, beispielsweise in Kammern des Kühlsystems der Verbrennungskraftmaschine 10 bzw. 30.

Dipl.-Phys. Heinrich Seids · Patentanwalt · Bierstadter Höhe 15 · Postfach 5105 · 6200 Wiesbaden 1 · ☎ (0 61 21) 56 20 22

Dipl.-Phys. Heinrich Seids · Patentanwalt · Bierstadter Höhe 15 · Postfach 5105 · 6200 Wiesbaden 1 · ☎ (0 61 21) 56 20 22

- 13 -

Figur 4 betrifft eine Möglichkeit zur Ausführung des erfindungsgemäßen Verfahrens an einem Dampferzeugerkessel oder einem Kessel für Dampf- oder Warmwasserheizungsanlagen. Von einem Brennstofftank 51 wird der Brennstoff über die Leitung 52 der Brennstoffpumpe 53 des Brenners 54 zugeführt. Von der Brennstoffpumpe 53 ist eine Brennstoffleitung 55 zu dem Abgasstutzen oder Rauchgasstutzen 56 des Kessels 50 geführt. Auf diesem Weg ist wiederum ein Sicherheitsventil 57 eingesetzt, das sich bei Betriebsstörung selbsttätig schließt. Von dem Sicherheitsventil 57 erstreckt sich ein in wärmeleitender Verbindung mit dem Rauchgas-Auslaß 56 des Kessels 50 gebrachter Abschnitt der Brennstoffleitung 55, die von dort zu der Brennerdüse 58 zurückgeführt ist. Wenn erwünscht, kann in diesen Rückführungsabschnitt der Brennstoffleitung 55 noch ein Gastrockner eingesetzt sein. Wenn erwünscht, kann in dieser Ausführung auch ein entsprechendes Aufwärmen der Verbrennungsluft stattfinden, wie es im Beispiel der Figur 2 erläutert ist.

In allen drei Ausführungsbeispielen wird von der der Erfindung zugrundeliegenden Überlegung ausgegangen, daß unmittelbrennbar nur gasförmige Stoffe sind und daß die flüssigen Brennstoffe und Kraftstoffe ausgehend von schwerem Heizöl über leichtes Heizöl, Super-Benzin, Benzin bis hin zu Kerosin Destillationsprodukte des Erdöls sind und über den dampfförmigen Zustand in Destillationskolonnen gewonnen

Dipl.-Phys. Heinrich Seids · Patentanwalt · Bierstadter Höhe 15 · Postfach 5105 · 6200 Wiesbaden 1 · ☎ (0 61 21) 56 20 22

- 14 -

worden sind und deshalb auch wieder in dampfförmigen und darüberhinaus in gasförmigen Zustand übergeführt werden können.

Man hat zwar bisher gemeint, daß es ausgeschlossen sei, einer bestimmten Gasmenge genau die notwendige Luftmenge beizumischen, um vollständige Verbrennung zu gewährleisten. Jedoch ist es durch die Erfindung gelungen, durch die Überführung der flüssigen Brennstoffe und Kraftstoffe in Gasform eine genaue Dosierung und intensive Vermischung mit Verbrennungsgas, insbesondere Verbrennungsluft zu gewährleisten. Es ist nicht mehr notwendig, nennenswerten Luftüberschuß vorzusehen. Insbesondere wird durch die Erfindung erreicht, daß die bisher für unumgänglich gehaltene Entstehung von Kohlenmonoxyd (CO) praktisch ausgeschlossen werden kann.

Durch die Erfindung wird auch eine wesentliche Herabsetzung der Temperatur in den Auspuffgasen bzw. Rauchgasen hervorgerufen. Gerade die Temperatur der Auspuffgase und Rauchgase bedeutet den bisher für unvermeidlich gehaltenen Wärmeverlust. Da durch die Erfindung eine genaue Dosierung des Kraftstoffes bez. Brennstoffes bezüglich der Verbrennungsluft und ein intensives Vermischen von Verbrennungsluft und Brenngas bzw. Kraftstoffgas möglich ist, ergibt sich ein freies Ausbrennen der Flamme und die Zuführung der notwendigen Verbrennungsluftmenge zum Brenngas. Dies bedeutet, daß

Dipl.-Phys. Heinrich Seids · Patentanwalt · Bierstadter Höhe 15 · Postfach 5105 · 6200 Wiesbaden 1 · ☏ (0 61 21) 56 20 22

- 15 -

vollkommene Verbrennung erreicht wird und daß Abgas nur noch ein Gemisch von Stickstoff, Wasser und Kohlendioxyd enthält.

Wenn in den obigen Ausführungen von gasförmigem Kraftstoff bzw. Brennstoff gesprochen ist, so bedeutet dies, daß der Zustand des Kraftstoffes bzw. Brennstoffes demjenigen eines idealen Gases im Sinne des Boyle-Marott e'schen Gesetzes angenähert ist. Soweit noch Bestandteile des gasförmigen Kraftstoffes bzw. Brennstoffes mehr der Art eines realen Gases nahekommen und Feuchtigkeit oder Kondensat bei Komprimieren bilden, kann dieses wie oben erläutert durch Gastrockner aufgefangen werden. Auf jeden Fall kommt der Kraftstoff bzw. Brennstoff als trockenes Gas in die Verbrennungskammer.

Dipl.-Phys. Heinrich Seids · Patentanwalt · Bierstadter Höhe 15 · Postfach 5105 · 6200 Wiesbaden 1 · ☏ (0 61 21) 56 20 22

# PATENTANWALT DIPL.-PHYS. HEINRICH SEIDS

62 Wiesbaden · Bierstadter Höhe 15 · Postfach 12068 · Telefon (0 61 21) 56 53 82

Postscheck Frankfurt/Main 1810 08 - 602 · Bank Deutsche Bank 395 63 72 · Nass. Sparkasse 108 00 30 65

Franz X. Wittek                                Wiesbaden, den 23. Juni 1980

ω 237    S/we

P a t e n t a n s p r ü c h e
========================================

1.) Verfahren zum Betreiben von Verbrennungsgeräten, insbesondere Heizungsgeräten und Verbrennungskraftmaschinen mit einem Gemisch von gasförmigem Brennstoff bzw. Kraftstoff und Verbrennungsgas, insbesondere Luft, dadurch gekennzeichnet, daß flüssiger, vergasbarer Brennstoff bzw. Kraftstoff vor dem Einführen in den Verbrennungsraum im gasförmigen, isothermen Brennstoff bzw. Kraftstoff übergeführt und vor oder in dem Verbrennungsraum mit dem Verbrennungsgas gemischt wird und daß die Temperatur des Gasgemisches vor der Verbrennung des Gases mit den im Verbrennungsraum vorgegebenen Ausdehnungsmöglichkeit und Wärmeabnahmeverhältnissen auf im wesentlichen isothermische Ausdehnung des Gasgemisches während der Verbrennung abgestimmt wird.

2.) Verfahren nach Anspruch 1, dadurch gekennzeichnet, daß die Wärme für die Überführung des flüssigen Brennstoffes bzw. Kraftstoffes in Gasform vom Abgas des jeweiligen Verbrennungsgerätes abgenommen wird.

Dipl.-Phys. Heinrich Seids · Patentanwalt · Bierstadter Höhe 15 · Postfach 5105 · 6200 Wiesbaden 1 · ☎ (0 61 21) 56 20 22

– 2 –

3.) Verfahren nach Anspruch 2, dadurch gekennzeichnet, daß der Brennstoff bzw. Kraftstoff beim Überführen in Gasform im wesentlichen auf die Temperatur des das Verbrennungsgerät verlassenden Abgases erhitzt wird.

4.) Verfahren nach Anspruch 2 oder 3, dadurch gekennzeichnet, daß bei Betriebsbeginn vernebelter Brennstoff bzw. Kraftstoff unter zunehmenden Aufheizen entsprechend der von den Abgasen abziehbaren Wärmemenge benutzt wird.

5.) Verfahren nach einem der Ansprüche 1 bis 3, dadurch gekennzeichnet, daß bei Betriebsbeginn ein dem jeweiligen Verbrennungsgerät in herkömmlicher Betriebsweise zugeordneter Brennstoff bzw. Kraftstoff bis Erreichen der Betriebstemperatur benutzt und dann in Gasform übergeführter Betriebs-Brennstoff bzw. -Kraftstoff zugeführt wird.

6.) Verfahren nach einem der Ansprüche 1 bis 5, dadurch gekennzeichnet, daß auch das mit dem in Gasform übergeführten Brennstoff bzw. Kraftstoff zu vermischendes Verbrennungsgas vorgeheizt wird.

7.) Verbrennungskraftmaschine mit Pumpe zum Zuführen eines flüssigen Kraftstoffes von einem Kraftstofftank zum Verbrennungsraum und Einrichtungen zum Dosieren der

Dipl.-Phys. Heinrich Seids · Patentanwalt · Bierstadter Höhe 15 · Postfach 5105 · 6200 Wiesbaden 1 · ☎ (0 61 21) 56 20 22

- 3 -

in den Verbrennungsraum einzuführenden Kraftstoffmenge und Verbrennungsgasmenge, dadurch gekennzeichnet, daß hinter der Kraftstoffpumpe bzw. vor dem Kraftstoffeinlaß in den Verbrennungsraum eine Kraftstoff-Heizvorrichtung eingesetzt ist, die dazu ausgebildet ist, den Kraftstoff vollständig in Gasform überzuführen, und die mit an dem Auspuffkrümmer angeschlossenen Einrichtungen zum Aufnehmen der erforderlichen Wärmemenge verbunden ist.

8.) Verbrennungskraftmaschine nach Anspruch 7, dadurch gekennzeichnet, daß die von der Kraftstoffpumpe kommende Kraftstoffleitung zum Wärmeaustausch um oder durch den Auspuffkrümmer geführt ist.

9.) Verbrennungskraftmaschine nach Anspruch 7 oder 8, mit einem flüssigen Kraftstoff vernebelnden und in dosierter Menge zum Verbrennungsraum abgebenden Vergaser, dadurch gekennzeichnet, daß die von der Kraftstoffpumpe zum Vergaser führende Kraftstoffleitung über die Kraftstoff-Heizvorrichtung geführt ist.

10.) Verbrennungskraftmaschine nach Anspruch 7 oder 8, mit den Kraftstoff in dosierter Menge unter Vernebeln in den Verbrennungsraum pressender Einspritzpumpe, dadurch gekennzeichnet, daß die von der Einspritzpumpe zum Ver-

Dipl.-Phys. Heinrich Seids · Patentanwalt · Bierstadter Höhe 15 · Postfach 5105 · 6200 Wiesbaden 1 · ☎ (0 61 21) 56 20 22

– 4 –

brennungsraum führende Kraftstoffleitung über die Kraftstoff-Heizvorrichtung geführt ist.

11.) Verbrennungskraftmaschine nach einem der Ansprüche 7
bis 9, in Form eines Düsentriebwerks oder Raketentriebwerks, dadurch gekennzeichnet, daß die Einrichtung zum
Übernehmen der für die Überführung des Kraftstoffes in
Gasform erforderlichen Wärmemenge aus dem Abgas an den
Düsenausgang bzw. Raketenauslaß angesetzt ist.

12.) Verbrennungskraftmaschine nach einem der Ansprüche
7 bis 11, gekennzeichnet durch eine Vorheiz-Vorrichtung
für das Verbrennungsgas, die an die Kühleinrichtungen
oder an die Auspuffeinrichtungen der Verbrennungskraftmaschine angeschlossen bzw. angesetzt ist.

13.) Heizungsvorrichtung zum Betrieb im Verfahren nach
einem der Ansprüche 1 bis 6, mit mindestens einem
an den Verbrennungsraum angesetzten Brenner für
flüssigen Brennstoff, der mindestens eine Brennstoffdüse und eine Brennstoffpumpe enthält, dadurch gekennzeichnet, daß an den Auslaß für die Abgase eine Einrichtung zur Aufnahme der zum vollständigen Überführen
des flüssigen Brennstoffes in Gasform erforderlichen
Wärmemenge angebracht und im Weg des Brennstoffes
zwischen der Brennstoffpumpe und der Brennerdüse eine
Brennstoff-Heizvorrichtung angebracht ist, die dazu

Dipl.-Phys. Heinrich Seids · Patentanwalt · Bierstadter Höhe 15 · Postfach 5105 · 6200 Wiesbaden 1 · ☏ (0 61 21) 56 20 22

- 5 -

ausgebildet ist, mittels der ihr von der Einrichtung zur Aufnahme der Wärme aus den Abgasen zugeführten Wärmemenge den Brennstoff vollständig in Gasform zu überführen und im wesentlichen auf die Temperatur der Abgase vorzuheizen.

14.) Heizungsvorrichtung nach Anspruch 13, dadurch gekennzeichnet, daß die von der Brennstoffpumpe zur Brennerdüse führende Brennstoffleitung über die Einrichtung zur Aufnahme von Wärme aus den Abgasen geführt ist.

15.) Heizungsvorrichtung nach Anspruch 13 oder 14, gekennzeichnet durch eine zusätzliche Vorheizvorrichtung für das Verbrennungsgas insbesondere Verbrennungsluft, wobei diese Vorheizvorrichtung an den Auslaß für die Abgase aus der Heizungsvorrichtung angesetzt ist.

Dipl.-Phys. Heinrich Seids · Patentanwalt · Bierstadter Höhe 15 · Postfach 5105 · 6200 Wiesbaden 1 · ☏ (0 61 21) 56 20 22

Fig.1

Fig.2

Fig.3

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 185 573 (SPINDLER)<br><br>* Seite 1, linke Spalte, Zeilen 1-19, 46-55, rechte Spalte, Zeilen 1-55; Seite 2, linke Spalte, Zeilen 1-27; Figuren 1-3 *<br><br>--- | 1,2,4, 5,7,8 |
| | US - A - 3 948 224 (KNAPP)<br><br>* Spalte 1, Zeilen 4-17; Spalte 3, Zeilen 17-32; Spalte 4, Zeilen 1-23; Figuren 1-5 *<br><br>--- | 1,2,7, 8,9 |
| | US - A - 1 991 021 (LEISTEN)<br><br>* Seite 1, linke Spalte, Zeilen 46-55; rechte Spalte, Zeilen. 1-55; Seite 2, linke Spalte, Zeilen 1-17, rechte Spalte, Zeilen 17-68; Figuren 1-7 *<br><br>--- | 1,2, 4-9 |
| | US - A - 3 667 436 (REICHHELM)<br><br>* Spalte 1, Zeilen 33-57; Spalte 2, Zeilen 55-75; Spalte 3, Zeilen 1-75; Spalte 4, Zeilen 1-15; Figur 1 *<br><br>--- | 1,2 |
| | US - A - 3 931 800 (GENDRON)<br><br>* Spalte 1, Zeilen 5-28, 42-53; Spalte 2, Zeilen 4-44; Figuren *<br><br>--- | 1,2,7, 8 |
| | US - A - 2 389 714 (BAKER)<br><br>* Seite 1, linke Spalte, Zeilen 28-36, 45-50; Seite 2, rechte Spalte, Zeilen 12-75; Seite 3, linke Spalte, Zeilen 1-23; Figuren 1-7 *<br><br>--- ./.. | 1-3,6, 12 |

### KLASSIFIKATION DER ANMELDUNG (Int. Cl.³)

F 23 K 5/00
F 23 L 15/04
F 02 M 31/18

### RECHERCHIERTE SACHGEBIETE (Int. Cl.³)

F 23 K
F 23 L
F 02 M
F 02 C
F 24 H

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsatze

E: kollidierende Anmeldung

D: in der Anmeldung angeführtes Dokument

L: aus andern Gründen angeführtes Dokument

&: Mitglied der gleichen Patentfamilie. übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 30.03.1981 | PHOA |

Europäisches
Patentamt

# EUROPÄISCHER RECHERCHENBERICHT

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | <u>CH - A - 109 971</u> (BAUMGARTNER) <br><br> * Insgesamt * <br><br> --- | 1,2,6 | |
| | <u>US - A - 4 106 457</u> (TOTTEN) <br><br> * Spalte 1, Zeilen 3-6, 53-68; Spalte 2, Zeilen 1-23, 51-68; Spalte 3, Zeilen 1-68; Spalte 4, Zeilen 1-28; Spalte 5, Zeilen 16-61; Spalte 6, Zeilen 7-51; Figuren 1-7 * <br><br> --- | 1-3,7 | |
| | <u>FR - A - 1 163 328</u> (CHAMP) <br><br> * Seite 1, rechte Spalte, Zeilen 8-38; Seite 2, linke Spalte, Zeilen 20-58; rechte Spalte, Zeilen 1-13,55-58; Seite 3, linke Spalte, Zeilen 1-4, 36-58; rechte Spalte, Zeilen 1-49; Seite 4, Zeilen 5-20; Figuren 1,2 * <br><br> --- | 1,2,5, 7,8-10 | RECHERCHIERTE SACHGEBIETE (Int. Cl. 3) |
| | <u>DE - A - 2 843 304</u> (MARCHIONNI) <br><br> * Seiten 1,2, Anspruch 1; Seite 10, Absätze 4,5; Seite 11, Absätze 1-4; Seite 12, Absätze 1,2; Figuren * <br><br> --- | 1,2,7, 10 | |
| | <u>US - A - 3 237 400</u> (KUHRT) <br><br> * Gesamte Patentschrift * <br><br> --- | 1,2,7, 11 | |
| | <u>FR - A - 1 306 319</u> (CHHABRA) <br><br> * Seite 1, linke Spalte, Zeilen 12-31; Seite 2, linke Spalte, Zeilen 7-29; rechte Spalte, Zeilen 17-25; Figuren 1,2 * <br><br> --- <br><br>                   ./.. | 6,12 | |

Europäisches
Patentamt

**EUROPÄISCHER RECHERCHENBERICHT**

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | US - A - 2 620 167 (HOPP) | 6,12 | |
| | * Spalte 3, Zeile 68 bis Spalte 4, Zeile 41; Figuren 1-6 * | | |
| | --- | | |
| | DE - A - 2 062 842 (SULZER) | 13-15 | |
| | * Seite 3, 2 letzte Absätze; Seite 4; Seite 5, Absätze 1,2; Figur 1 * | | |
| | --- | | |
| A | FR - A - 394 840 (MARTIN-SAXTON) | | |
| A | DE - A - 1 931 539 (M.A.N.) | | RECHERCHIERTE SACHGEBIETE (Int. Cl. 3) |
| A | US - A - 2 586 416 (BUCKLEY) | | |
| | | | |
| | -------- | | |

EPA Form 1503.2  06.78